# EUROPEAN PATENT APPLICATION

(11) **EP 2 000 878 A1**
(43) Date of publication of application: **10.12.2008**
(21) Application number: 08162789.5
(22) Date of filing: 23.03.2001
(51) Int. Cl.: G06F 1/16

(54) **Status display control unit, electronic equipment and storage medium**

(30) Priority: 23.03.2000 JP 2000083047; 16.03.2001 JP 2001075898
(62) Divisional of application: 01302716.4
(71) Applicant: Fujitsu Ltd., Kawasaki-shi, Kanagawa 211-8588 (JP)
(72) Inventor: Ohki, Hisashi, Kawasaki-shi, Kanagawa 211-8588 (JP); Masuzawa, Toshihisa, Tokyo 206-0801 (JP); Hirayama, Ryoji, Kawasaki-shi, Kanagawa 211-8588 (JP); Aoyama, Yuji, Kawasaki-shi, 211-8588 (JP); Hatakeyama, Tetsushi, Kawasaki-shi, Kanagawa 211-8588 (JP); Inoue, Naoyuki, Kawasaki-shi, Kanagawa 211-8588 (JP); Okumura, Masafumi, Kawasaki-shi, Kanagawa 211-8588 (JP); Sotokawa, Akio, Kawasaki-shi, Kanagawa 211-8588 (JP); Nakada, Eisuke, Kawasaki-shi, Kanagawa 211-8588 (JP); Oka, Toshio, Kawasaki-shi, Kanagawa 211-8588 (JP); Takeda, Kazuhiro, Kawasaki-shi, Kanagawa 211-8588 (JP); Ageta, Masato, Kawasaki-shi, Kanagawa 211-8588 (JP); Suda, Takashi, Kawasaki-shi, Kanagawa 211-8588 (JP); Matsunaga, Keigo, Kawasaki-shi, Kanagawa 211-8588 (JP); Kodama, Mitsuru, Kawasaki-shi, Kanagawa 211-8588 (JP)
(74) Representative: Wilding, Frances Ward

(57) **Abstract**

An electronic equipment is provided with a main display section, an auxiliary display section having a display area smaller than that of the main display section, and a controller displaying a plurality of status information of the electronic equipment in the auxiliary display section by a combination of a message using characters and at least one of symbols and a color display and/or a blinking display of the auxiliary display section.

## Description

### BACKGROUND OF THE INVENTION

This application claims the benefit of a Japanese Patent Applications No.2000-083047 filed March 23, 2000 and No.2001-075898 filed March 16, 2001, in the Japanese Patent Office, the disclosure of which is hereby incorporated by reference.

### 1. Field of the Invention

The present invention generally relates to status display control units, electronic equipments and storage media, and more particularly to a status display control unit for controlling a display of status information of an electronic equipment, an electronic equipment which is provided with such a status display control unit, and a computer-readable storage medium which stores a program for causing a computer to make display the status information.

In this specification, an electronic equipment includes portable information processing apparatuses such as lap-top personal computers and notebook type word processors, and various kinds of intelligent equipments provided with various functions such as functions for transmitting and/or receiving electronic mail.

### 2. Description of the Related Art

In some the portable electronic equipments such as the lap-top personal computer, an auxiliary display section is provided in addition to a normal main display section. The auxiliary display section displays status information of the electronic equipment using lamps and symbols such as marks and icons. A display area of the auxiliary display section is small compared to that of the main display section. This is because, if the auxiliary display section were made large, it would become impossible to provide essential elements on the electronic equipment, such as a keyboard, switches and buttons, terminals and speakers.

Accordingly, due to the small size of the auxiliary display section, only a small number of status information of the electronic equipment can be displayed in the auxiliary display section. For this reason, the status information displayed in the auxiliary display section of the conventional electronic equipment is limited to the track number of the compact disk (CD) which is being played, the present time, the remaining capacity of the battery, the received electronic mail or the like. In other words, the status information displayed in the auxiliary display section is extremely limited.

Examples of the conventional electronic equipment provided with the auxiliary display section described above may be found, for example, in Japanese Laid-Open Patent Applications No.6-43966, No.9-26832 and No.11-119875, and lap-top personal computer model PC-FJ100 series manufactured by Sharp Corporation of Japan.

In the conventional electronic equipment having the auxiliary display section with the limited display area, there was a problem in that the number of status information of the electronic equipment that can be displayed is limited and detailed status information of the electronic equipment cannot be displayed, because the status information is displayed using lamps, marks and icons.

### SUMMARY OF THE INVENTION

Accordingly, it is a general object of the present invention to provide a novel and useful status display control unit, electronic equipment and storage medium, in which the problem described above is eliminated.

Another and more specific object of the present invention is to provide a status display control unit, electronic equipment and storage medium, which can display detailed status information of the electronic equipment within a limited display area.

Still another object of the present invention is to provide a status display control unit for displaying status information of an electronic equipment which includes a main display section and an auxiliary display section, comprising a controller displaying a standby transition time in the auxiliary display section, the standby transition time indicating a time when the electronic equipment makes a transition to a standby state.

A further object of the present invention is to provide a status display control unit for displaying status information of an electronic equipment which includes a main display section and an auxiliary display section, comprising a controller displaying a next electronic mail check time in the auxiliary display section, the next electronic mail check time indicating a time when an electronic mail is to be checked next in the electronic equipment.

Another object of the present invention is to provide a status display control unit for displaying status information of an electronic equipment which includes a main display section and an auxiliary display section, comprising a controller displaying a greeting message by characters in the auxiliary display section depending on a starting time of the electronic equipment.

Still another object of the present invention is to provide a status display control unit for displaying status information of an electronic equipment which includes a main display section and an auxiliary display section, comprising a controller displaying a portable recording medium playing state of the electronic equipment in the auxiliary display section.

A further object of the present invention is to provide a status display control unit for displaying status information of an electronic equipment which includes a main display section and an auxiliary display section, comprising a controller displaying a communication connection status of the electronic equipment in the auxiliary display section.

Another object of the present invention is to provide a status display control unit for displaying status information of an electronic equipment which includes a main display section and an auxiliary display section, comprising a controller displaying a message by characters, indicating a reception of an electronic mail by the electronic equipment, in the auxiliary display section.

Still another object of the present invention is to provide a status display control unit for displaying status information of an electronic equipment which includes a main display section and an auxiliary display section, comprising a controller displaying a notification, indicating a reception of a specific electronic mail by the electronic equipment, in the auxiliary display section.

A further object of the present invention is to provide a status display control unit for displaying status information of an electronic equipment which includes a main display section and an auxiliary display section, comprising a controller displaying information, capable of specifying an electronic mail received by the electronic equipment, in the auxiliary display section.

Another object of the present invention is to provide a status display control unit for displaying status information of an electronic equipment which includes a main display section and an auxiliary display section, comprising a controller displaying at least one of a communication time and a communication cost of the electronic equipment in the auxiliary display section.

Still another object of the present invention is to provide a status display control unit for displaying status information of an electronic equipment which includes a main display section and an auxiliary display section, comprising a controller displaying model information of the electronic equipment in the auxiliary display section when starting the electronic equipment.

A further object of the present invention is to provide a status display control unit for displaying status information of an electronic equipment which includes a main display section and an auxiliary display section, comprising a controller displaying a position of a volume adjusting knob of the electronic equipment in the auxiliary displays section.

Another object of the present invention is to provide a status display control unit for displaying status information of an electronic equipment which includes a main display section and an auxiliary display section, comprising a controller displaying the status information in the auxiliary display section using color display and/or blinking display.

Still another object of the present invention is to provide a status display control unit for displaying status information of an electronic equipment in an auxiliary display section which has a display area smaller than that of a main display section of the electronic equipment, comprising a controller displaying a plurality of status information of the electronic equipment in the auxiliary display section, by messages in characters in combination with at least one of symbols and color display and/or blinking display of the auxiliary display section.

A further object of the present invention is to provide an electronic equipment comprising a main display section, an auxiliary display section displaying status information of the electronic equipment, and a controller displaying a standby transition time in the auxiliary display section, the standby transition time indicating a time when the electronic equipment makes a transition to a standby state.

Another object of the present invention is to provide an electronic equipment comprising a main display section, an auxiliary display section displaying status information of the electronic equipment, and a controller displaying a next electronic mail check time in the auxiliary display section, the next electronic mail check time indicating a time when an electronic mail is to be checked next in the electronic equipment.

A further object of the present invention is to provide an electronic equipment comprising a main display section, an auxiliary display section displaying status information of the electronic equipment, and a controller displaying a greeting message by characters in the auxiliary display section depending on a starting time of the electronic equipment.

Another object of the present invention is to provide an electronic equipment comprising a main display section, an auxiliary display section displaying status information of the electronic equipment, and a controller displaying a portable recording medium playing state of the electronic equipment in the auxiliary display section.

Still another object of the present invention is to provide an electronic equipment comprising a main display section, an auxiliary display section displaying status information of the electronic equipment, and a controller displaying a communication connection status of the electronic equipment in the auxiliary display section.

A further object of the present invention is to provide an electronic equipment comprising a main display section, an auxiliary display section displaying status information of the electronic equipment, and a controller displaying a message by characters, indicating a reception of an electronic mail by the electronic equipment, in the auxiliary display section.

Another object of the present invention is to provide an electronic equipment comprising a main display section, an auxiliary display section displaying status information of the electronic equipment, and a controller displaying a notification, indicating a reception of a specific electronic mail by the electronic equipment, in the auxiliary display section.

Still another object of the present invention is to provide an electronic equipment comprising a main display section, an auxiliary display section displaying status information of the electronic equipment, and a controller displaying information, capable of specifying an electronic mail received by the electronic equipment, in the auxiliary display section.

A further object of the present invention is to provide an electronic equipment comprising a main display section, an auxiliary display section displaying status information of the electronic equipment, and a controller displaying at least one of a communication time and a communication cost of the electronic equipment in the auxiliary display section.

Another object of the present invention is to provide an electronic equipment comprising a main display section, an auxiliary display section displaying status information of the electronic equipment, and a controller displaying model information of the electronic equipment in the auxiliary display section when starting the electronic equipment.

Still another object of the present invention is to provide an electronic equipment comprising a main display section, an auxiliary display section displaying status information of the electronic equipment, and a controller displaying a position of a volume adjusting knob of the electronic equipment in the auxiliary displays section.

A further object of the present invention is to provide an electronic equipment comprising a main display section, an auxiliary display section displaying status information of the electronic equipment, and a controller displaying the status information in the auxiliary display section using color display and/or blinking display.

Another object of the present invention is to provide an electronic equipment comprising a main display section, an auxiliary display section which has a display area smaller than that of the main display section, and a controller displaying a plurality of status information of the electronic equipment in the auxiliary display section, by messages in characters in combination with at least one of symbols and color display and/or blinking display of the auxiliary display section.

Still another object of the present invention is to provide a computer-readable storage medium which stores a program for causing a computer to display status information of an electronic equipment which includes a main display section and an auxiliary display section, the program comprising a control procedure causing the computer to display a standby transition time in the auxiliary display section, the standby transition time indicating a time when the electronic equipment makes a transition to a standby state.

A further object of the present invention is to provide a computer-readable storage medium which stores a program for causing a computer to display status information of an electronic equipment which includes a main display section and an auxiliary display section, the program comprising a control procedure causing the computer to display a next electronic mail check time in the auxiliary display section, the next electronic mail check time indicating a time when an electronic mail is to be checked next in the electronic equipment.

Another object of the present invention is to provide a computer-readable storage medium which stores a program for causing a computer to display status information of an electronic equipment which includes a main display section and an auxiliary display section, the program comprising a control procedure causing the computer to display a greeting message by characters in the auxiliary display section depending on a starting time of the electronic equipment.

Still another object of the present invention is to provide a computer-readable storage medium which stores a program for causing a computer to display status information of an electronic equipment which includes a main display section and an auxiliary display section, the program comprising a control procedure causing the computer to display a portable recording medium playing state of the electronic equipment in the auxiliary display section.

A further object of the present invention is to provide a computer-readable storage medium which stores a program for causing a computer to display status information of an electronic equipment which includes a main display section and an auxiliary display section, the program comprising a control procedure causing the computer to display a communication connection status of the electronic equipment in the auxiliary display section.

Another object of the present invention is to provide a computer-readable storage medium which stores a program for causing a computer to display status information of an electronic equipment which includes a main display section and an auxiliary display section, the program comprising a control procedure causing the computer to display a message by characters, indicating a reception of an electronic mail by the electronic equipment, in the auxiliary display section.

Still another object of the present invention is to provide a computer-readable storage medium which stores a program for causing a computer to display status information of an electronic equipment which includes a main display section and an auxiliary display section, the program comprising a control procedure causing the computer to display a notification, indicating a reception of a specific electronic mail by the electronic equipment, in the auxiliary display section.

A further object of the present invention is to provide a computer-readable storage medium which stores a program for causing a computer to display status information of an electronic equipment which includes a main display section and an auxiliary display section, the program comprising a control procedure causing the computer to display information, capable of specifying an electronic mail received by the electronic equipment, in the auxiliary display section.

Another object of the present invention is to provide a computer-readable storage medium which stores a program for causing a computer to display status information of an electronic equipment which includes a main display section and an auxiliary display section, the program comprising a control procedure causing the computer to display at least one of a communication time and a communication cost of the electronic equipment in the auxiliary display section.

Still another object of the present invention is to provide a computer-readable storage medium which stores a program for causing a computer to display status information of an electronic equipment which includes a main display section and an auxiliary display section, the program comprising a control procedure causing the computer to display model information of the electronic equipment in the auxiliary display section when starting the electronic equipment.

A further object of the present invention is to provide a computer-readable storage medium which stores a program for causing a computer to display status information of an electronic equipment which includes a main display section and an auxiliary display section, the program comprising a control procedure causing the computer to display a position of a volume adjusting knob of the electronic equipment in the auxiliary displays section.

Another object of the present invention is to provide a computer-readable storage medium which stores a program for causing a computer to display status information of an electronic equipment which includes a main display section and an auxiliary display section, the program comprising a control procedure causing the computer to display the status information in the auxiliary display section using color display and/or blinking display.

Still another object of the present invention is to provide a computer-readable storage medium which stores a program for causing a computer to display status information of an electronic equipment which includes a main display section and an auxiliary display section, the program comprising a control procedure causing the computer to display a plurality of status information of the electronic equipment in the auxiliary display section, by messages in characters in combination with at least one of symbols and color display and/or blinking display of the auxiliary display section.

A further object of the present invention is to provide a status display control unit for displaying status information of an electronic equipment which includes a main display section and an auxiliary display section, comprising a controller displaying contents set in correspondence with time in the auxiliary display section.

Another object of the present invention is to provide a status display control unit for displaying status information of an electronic equipment which includes a main display section and an auxiliary display section, comprising a controller displaying information related to input of a password of the electronic equipment in the auxiliary display section.

Still another object of the present invention is to provide an electronic equipment comprising a main display section, an auxiliary display section displaying status information of the electronic equipment, and a controller displaying contents set in correspondence with time in the auxiliary display section.

A further object of the present invention is to provide an electronic equipment comprising a main display section, an auxiliary display section displaying status information of the electronic equipment, and a controller displaying information related to input of a password of the electronic equipment in the auxiliary display section.

Another object of the present invention is to provide a computer-readable storage medium which stores a program for causing a computer to display status information of an electronic equipment which includes a main display section and an auxiliary display section, the program comprising a control procedure causing the computer to display contents set in correspondence with time in the auxiliary display section.

Still another object of the present invention is to provide a computer-readable storage medium which stores a program for causing a computer to display status information of an electronic equipment which includes a main display section and an auxiliary display section, the program comprising a control procedure causing the computer to display information related to input of a password of the electronic equipment in the auxiliary display section.

A further object of the present invention is to provide a status display control unit for displaying status information of an electronic equipment on an auxiliary display section of the electronic equipment having a display area smaller than a main display section of the electronic equipment, comprising a controller displaying a plurality of status information of the electronic equipment in the auxiliary display section by a combination of a message using characters and at least one of symbols and a color display and/or a blinking display of the auxiliary display section.

Another object of the present invention is to provide an electronic equipment comprising a main display section, an auxiliary display section having a display area smaller than that of the main display section, and a controller displaying a plurality of status information of the electronic equipment in the auxiliary display section by a combination of a message using characters and at least one of symbols and a color display and/or a blinking display of the auxiliary display section.

Therefore, according to the present invention, it is possible to realize a status display control unit, electronic equipment and storage medium, which can display detailed status information of the electronic equipment within a limited display area.

Other objects and further features of the present invention will be apparent from the following detailed description when read in conjunction with the accompanying drawings.

### BRIEF DESCRIPTION OF THE DRAWINGS

FIG. 1 is a perspective view showing an embodiment of an electronic equipment in a state where a lid member is closed;
FIG. 2 is a perspective view showing the embodiment of the electronic equipment in a state where the lid member is open;
FIG. 3 is a diagram showing a basic structure of an auxiliary display section;
FIG. 4 is a diagram showing a more detailed structure of the auxiliary display section together with a mode select switch and an application button group;
FIG. 5 is a system block diagram showing a hardware construction of the embodiment of the electronic equipment;
FIG. 6 is a diagram for explaining a process of a power supply MPU for detecting a knob position;
FIG. 7 is a system block diagram showing the auxiliary display section and interfaces;
FIG. 8 is a diagram showing software and hardware structures of an information processing apparatus;
FIG. 9 is a flow chart for explaining an operation when turning ON the power of the information processing apparatus;
FIG. 10 is a flow chart for explaining a process shown in FIG. 9 in more detail;
FIGS. 11A and 11B are diagrams showing information displayed during a BIOS process;
FIG. 12 is a diagram showing a tray menu screen;
FIG. 13 is a diagram showing a message board setting screen;
FIG. 14 is a diagram showing a timer setting screen;
FIG. 15 is a diagram showing a message setting screen;
FIG. 16 is a flow chart for explaining an operation dependent on various events;
FIG. 17 is a flow chart for explaining a process shown in FIG. 16 in more detail;
FIGS. 18A through 18J are diagrams showing various display information depending on the operation; and
FIG. 19 is a flow chart for explaining the operation dependent on the various events.

### DESCRIPTION OF THE PREFERRED EMBODIMENTS

Various embodiments of a status display control unit, an electronic equipment and a computer-readable storage medium according to the present invention will be described with reference to the drawings.

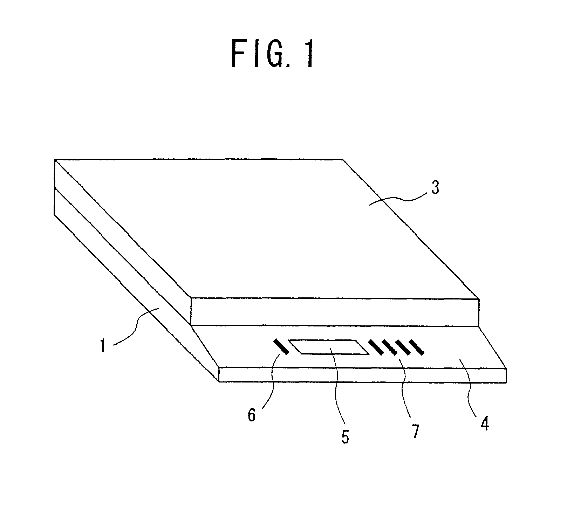

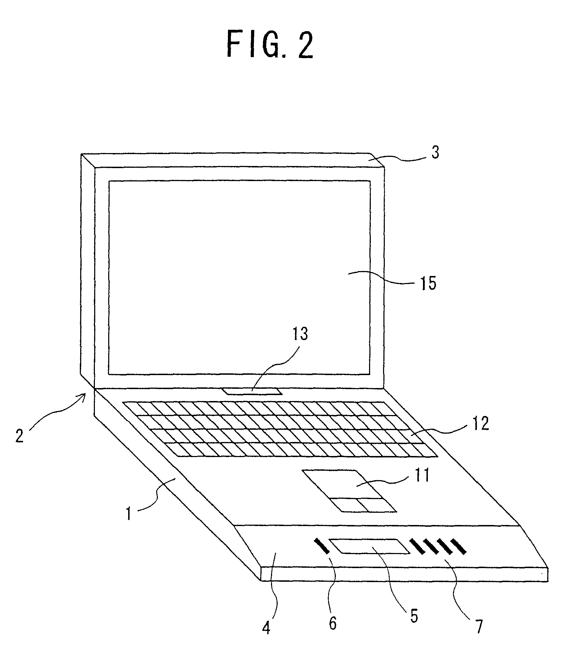

FIG. 1 is a perspective view showing an embodiment of the electronic equipment in a state where a lid member is closed. In addition, FIG. 2 is a perspective view showing the embodiment of the electronic equipment in a state where the lid member is open. This embodiment of the electronic equipment employs an embodiment of the status display control unit according to the present invention. In this embodiment of the electronic equipment, the present invention is applied to a portable information processing apparatus.

As shown in FIGS. 1 and 2, the portable information processing apparatus generally includes a main body 1, and a lid member 3 which is capable of opening and closing with respect to the main body 1, via a hinge part 2. The main body 1 includes a front panel 4 which is exposed even in the state where the lid member 3 is closed. An auxiliary display section 5, a mode select switch 6, and an application button group 7 are provided in this front panel 4. In addition, a cursor moving mechanism 11, a keyboard 12 and an auxiliary display section 13 are provided on the main body 1, as shown in FIG. 2. A main display section 15 is provided on the lid member 3. The main display section 15 is provided at a position which is visible in the state where the lid member 3 is open.

In this embodiment, the auxiliary display section 13 is provided at a position in a vicinity of the hinge part 2, and the auxiliary display section 13 is not visible when the lid member 3 is closed. However, the location of the auxiliary display section 13 is not limited to the position shown in FIG. 2. The auxiliary display section 13 may be provided at an arbitrary position on the main body 1 or, at an arbitrary position on the lid member 3 such as on a top surface of the lid member 3 on the opposite side of the main display section 15. Furthermore, the auxiliary display section 13 may be omitted.

The display of the status information of the information processing apparatus may be made using at least one of the auxiliary display sections 5 and 13. In this embodiment, it is assumed for the sake of convenience that the status information is displayed using the auxiliary display section 5. In addition, it is assumed for the sake of convenience that the auxiliary display sections 5 and 13 basically have the same construction. Hence, a description will only be given with respect to the construction and display contents of the auxiliary display section 5, and a description of the construction and display contents of the auxiliary display section 13 will be omitted. Of course, the auxiliary display sections 5 and 13 may have mutually different constructions.

A display made in the auxiliary display section 5 is easily recognizable by the user, even in a state where the lid member 3 is closed. Accordingly, the user can recognize various status information from the display made in the auxiliary display section 5 when the lid member 3 is closed, such as during a standby state of the information processing apparatus and when the information processing apparatus is temporarily not used and the user has closed the lid member 3. Even in a state where the main display section 15 is not used, it is desirable that the auxiliary display section 5 is always visible. Therefore, it is not essential to provide both the auxiliary display sections 5 and 13, and for the purposes described above, it is sufficient to provide only the auxiliary display section 5 on the information processing apparatus.

In order to make the auxiliary display section 5 visible to the user even when the main display section 15 is not used, such as when the lid member 3 is closed, it is possible to employ the structure of a sub display section of an information processing apparatus proposed in a Japanese Laid-Open Patent Application No.11-119875 for the auxiliary display section 5. According to the proposed information processing apparatus, a main body and a lid member which has a main display section are connected via a hinge part, and the sub display section is provided in the hinge part. A cutout corresponding to the sub display section is provided in the lid member, so that the sub display section is exposed in both the open and closed states of the lid member. By employing the structure of this sub display section for the auxiliary display section 5 of this embodiment, it becomes possible for the user to recognize various status information from the display made in the auxiliary display section 5 when the lid member 3 is closed, such as during the standby state of the information processing apparatus and when the information processing apparatus is temporarily not used and the user has closed the lid member 3.

Of course, the number of auxiliary display sections provided on the information processing apparatus is not limited to that of this embodiment, and it is possible to provide only one auxiliary display section or to provide more than two auxiliary display sections, if necessary.

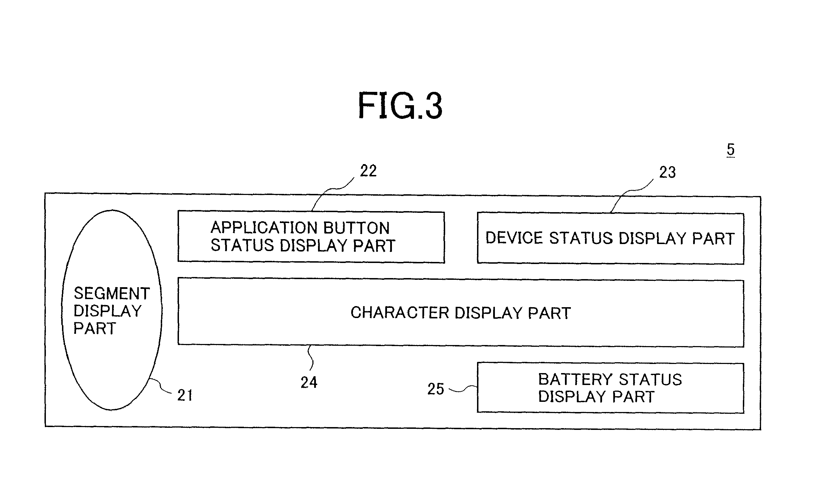

FIG. 3 is a diagram showing a basic structure of the auxiliary display section 5. As shown in FIG. 3, the auxiliary display section 5 includes a segment display part 21, an application button status display part 22, a device status display part 23, a character display part 24, and a battery status display part 25. Characters displayed on the character display part 24 include alphanumeric characters and symbols.

The segment display part 21 includes a plurality of segment displays for indicating operation state and the like of a CD player (not shown) which has a known construction and is provided within the information processing apparatus. For example, the segment display part 21 displays the track number of the music piece which is presently being played on the CD player and the like. Of course, instead of indicating the operation state and the like of the CD player, it is possible to indicate the operation state and the like of an apparatus (apparatus adapted to record and/or reproduce information with respect to a portable recording medium) which uses a portable recording medium other than the CD, such as a digital versatile disk (DVD).

The application status display part 22 displays the present mode of the application button which forms the application button group 7 and is manipulated when selecting an application. For example, the application status display part 22 displays the CD player function, the application software starting switch function, the security button function, the button lock function and the like.

The device status display section 23 displays the status of hardware devices, such as the sleep state of the information processing apparatus, the status of the PCMCIA card, the status of the hard disk drive (HDD), the status of the CD, the status of the keyboard 12, and the volume of the hardware device such as the CD player.

The character display part 24 has a display area capable of displaying a character string, and is used to display the status information and the like of the information processing apparatus. For example, the character display part 24 may display as it is a message sent from an application layer of a higher level, and the display contents on the character display part 24 is not limited to specific contents. In addition, the characters displayed in the character display part 24 may scroll. Furthermore, a back light having a known construction is provided in the character display part 24, and the display using a liquid crystal display (LCD) may be made in a plurality of colors or made to blink, using the back light. Of course, the display using the LCD may be made in color or made to blink, by itself.

The battery status display part 25 displays the remaining capacity of a battery (not shown) which is used by the information processing apparatus, a charged state of the battery and the like.

The color display or the blinking of the display may also be made in any of the segment display part 21, the application button status display part 22, the device status display part 23 and the battery status display part 25, similarly as in the case of the character display part 24.

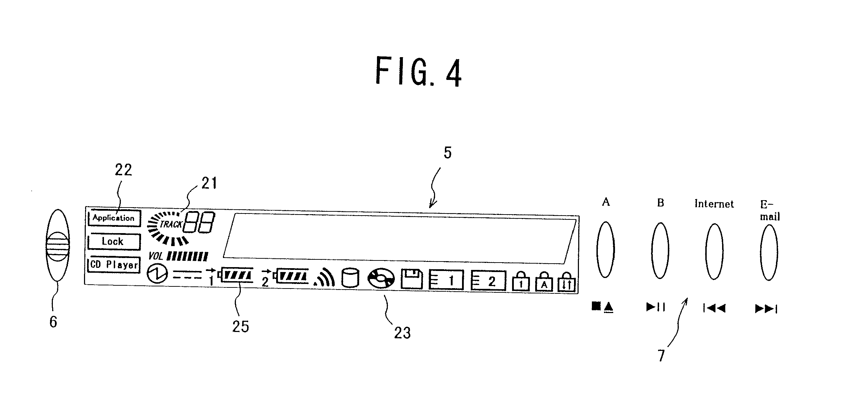

FIG. 4 is a diagram showing a more detailed structure of the auxiliary display section 5 together with the mode select switch 6 and the application button group 7. In FIG. 4, those parts which are the same as those corresponding parts in FIGS. 1 through 3 are designated by the same reference numerals, and a description thereof will be omitted. In FIG. 4, the application button group 7 includes four application buttons for selecting an application A, an application B, the internet, and the electronic mail (e-mail).

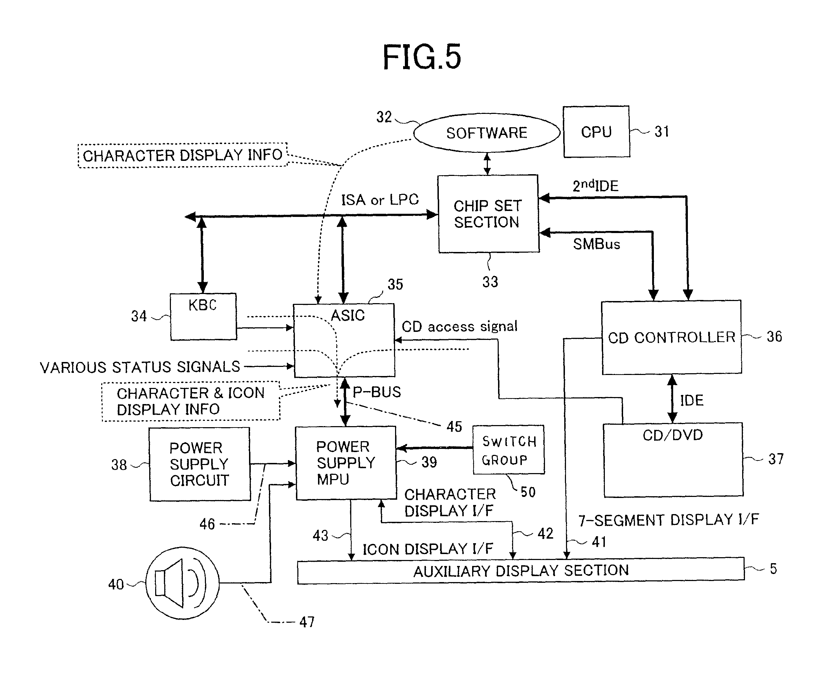

FIG. 5 is a system block diagram showing a hardware construction of this embodiment of the electronic equipment. The information processing apparatus includes a CPU 31, a software 32 which is executed by the CPU 31, a chip set section 33, a keyboard control (KBC) section 34, an ASIC register 35, a CD controller 36, a CD and/or digital versatile disk (DVD) player (CD/DVD player) 37, a power supply circuit 38, a power supply MPU 39, a hardware volume adjusting knob 40, a segment display interface 41, a character display interface 42, an icon display interface 43, a P-BUS interface 45, a power supply circuit interface 46, a hardware volume interface 47, a switch group 50, and the auxiliary display section 5 which are connected as shown in FIG. 5.

The CPU 31 controls the entire operation of the information processing apparatus, and executes the software 32 such as application programs (hereinafter simply referred to as applications). The software 32 itself is stored in an arbitrary recording medium. The chip set section 33 sets various parts within the main body 1 depending on instructions from the CPU 31. The ASIC register 35 is provided to store the status information which is to be displayed in the auxiliary display section 5. For example, character display information from the CPU 31, keyboard state information from the KBC section 34, various status signals, CD access signals from the CD/DVD player 37 and the like are stored in the ASIC register 35.

The arbitrary recording medium which stores the software 32 forms an embodiment of a computer-readable storage medium according to the present invention. In other words, the recording medium forming the computer-readable storage medium stores a program for causing a computer, such as the CPU 31 of the information processing apparatus, to control the status display according to this embodiment of the status display control unit. The program causes the computer to display the status information of the information processing apparatus which may be the computer itself. The recording medium forming the computer-readable storage medium may be selected from any kind of recording media capable of storing the program, including semiconductor memory devices such as ROMs and RAMs, magnetic recording media such as magnetic disks, optical recording media such as CD-ROMs, magnetooptical recording media, and memory cards.

The power supply MPU 39 makes access to the ASIC register 35 using the P-BUS interface 45. Based on the accessed information, the power supply MPU 39 supplies character and icon display information, that is, status information, to the auxiliary display section 5 via the character display interface 42 and the icon display interface 43.

The power supply circuit 38 supplies a power supply voltage from the battery of an AC adapter to various parts within the information processing apparatus. The power supply MPU 39 reads power supply information from the power supply circuit 38 via the power supply circuit interface 46, and makes a display in the auxiliary display section 5 after carrying out a calculation process or the like. The power supply information which is subjected to the calculation process of the power supply MPU 39 includes battery information indicating the remaining capacity of the battery, and the like.

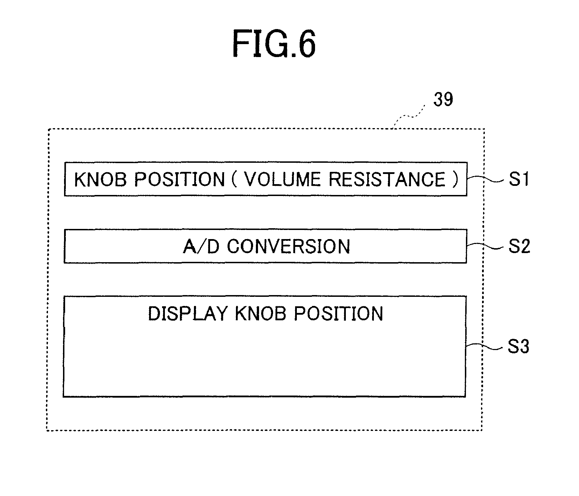

The hardware volume adjusting knob 40 is a dial type knob which supplies a volume resistance dependent on the knob position to the power supply MPU 39 via the hardware volume interface 47. FIG. 6 is a diagram for explaining a process of the power supply MPU 39 for detecting the knob position of the hardware volume adjusting knob 40. In a step S1, the power supply MPU 39 inputs, from the hardware volume adjusting knob 40, the volume resistance which is dependent on the knob position of the hardware volume adjusting knob 40, via the hardware volume interface 47. In a step S2, the power supply MPU 39 subjects the input volume resistance to an analog-to-digital (A/D) conversion. In a step S3, the power supply MPU 39 supplies to the auxiliary display section 5, via the icon display interface 43, icon display information for displaying the knob position on the device status display part 23 of the auxiliary display section 5.

The switch group 50 includes the mode select switch 6 and the application buttons of the application button group 7.

Segment display information from the CD controller 36 or the like is supplied to the auxiliary display section 5 via the segment display interface 41.

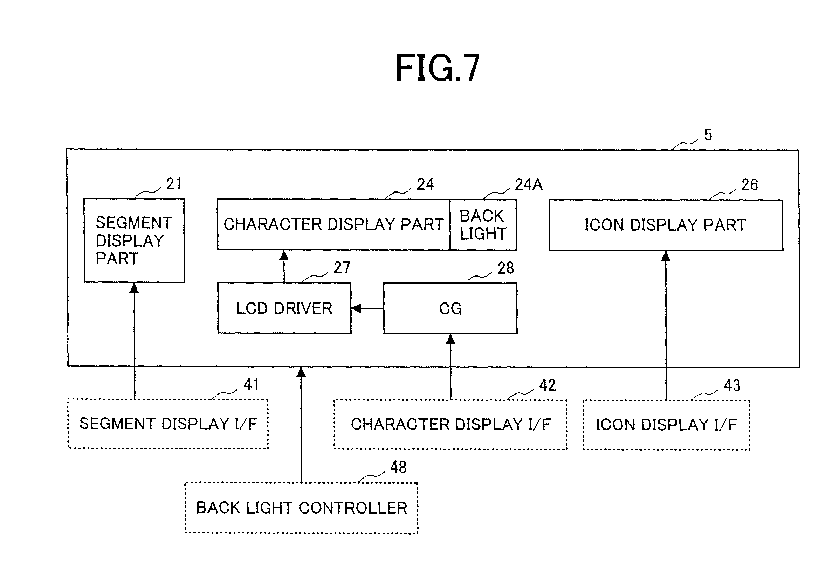

FIG. 7 is a system block diagram showing the auxiliary display section 5 and the interfaces 41 through 43. The character display part 24 is provided with a back light 24A having an arbitrary structure capable of lighting in a plurality of colors. The display parts 22 and 23 other than the character display part 24 are illustrated as an icon display part 26 in FIG. 7. In addition, the character display interface 42 employs a parallel or serial data transfer technique as in TTL interfaces and CMOS interfaces. For this reason, the auxiliary display section 5 is provided with a LCD driver 27 including an A.C. circuit for driving the character display part 24 which is made of LCD, and a character generator (CG) 28. The character display interface 42 supplies character display information to this character generator 28.

The segment display interface 41 supplies to the segment display part 21 which is made of LCD, segment display information related to a number having an arbitrary number of digits or the like, for directly driving and making the display on the segment display part 21. The icon display interface 43 supplies various icon display information to the icon display part 26 which is made of LCD, for directly driving and making the display on the icon display part 26.

The illustration of a back light controller 48 is omitted in FIG. 5, but is connected to the auxiliary display section 5 as shown in FIG. 7. Based on the display information from the power supply MPU 39, the back light controller 48 controls the ON/OFF state, the color and the like of the back light 24A of the character display part 24, including the ON state, the OFF state and the blinking interval.

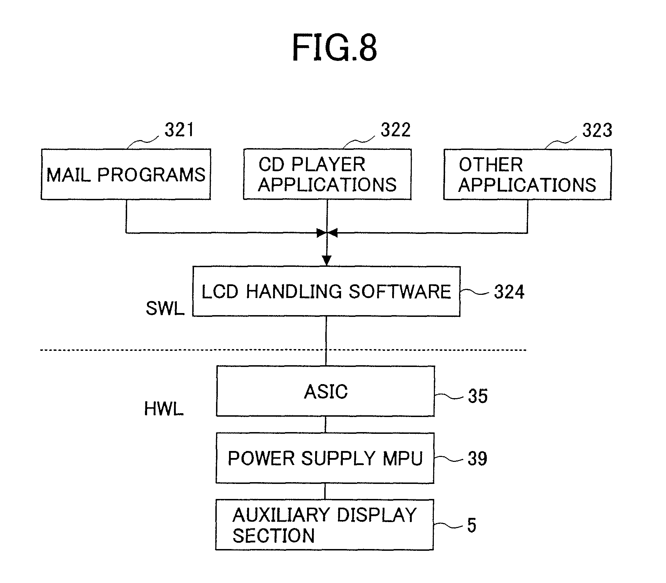

FIG. 8 is a diagram showing the software and hardware structures of the information processing apparatus. In FIG. 8, a software layer SWL includes mail programs 321, CD player applications 322, other applications 323, and a LCD handling software (driver) 324, which correspond to the software 32 shown in FIG. 5. On the other hand, a hardware layer HWL includes the ASIC register 35, the power supply MPU 39, the auxiliary display section 5 and the like. The illustration of other hardware parts of the hardware layer HWL, such as the chip set section 33, is omitted in FIG. 8 since the other hardware parts are shown in FIG. 5.

The mail programs 321 include programs for realizing functions related to the electronic mail, such as transmitting and receiving the electronic mail. The CD player applications 322 include programs for realizing various functions of the CD/DVD player 37. The LCD handling software 324 is provided to make access to the ASIC register 35 when making the display in the auxiliary display section 5. Accordingly, the ASIC register 35 has a role of providing a channel between the LCD handling software 324 and the power supply MPU 39.

The LCD handling software 324 carries out the following processes (a) through (e).
(a) writing the display information to be displayed in the auxiliary display section 5 into the ASIC register 35.
(b) Controlling the display in the auxiliary display section 5.
(c) Arbitration of messages sent from an application layer of a higher level. In other words, when a plurality of messages are transmitted from a plurality of applications, an arbitration is made to successively display these messages in the auxiliary display section 5 in turns or rotation, for example.
(d) Controlling the ON/OFF display mode of the auxiliary display section 5 or the ON/OFF state of the back light 24A.
(e) Controlling the color display mode of the auxiliary display section 5 or the color of the back light 24A.

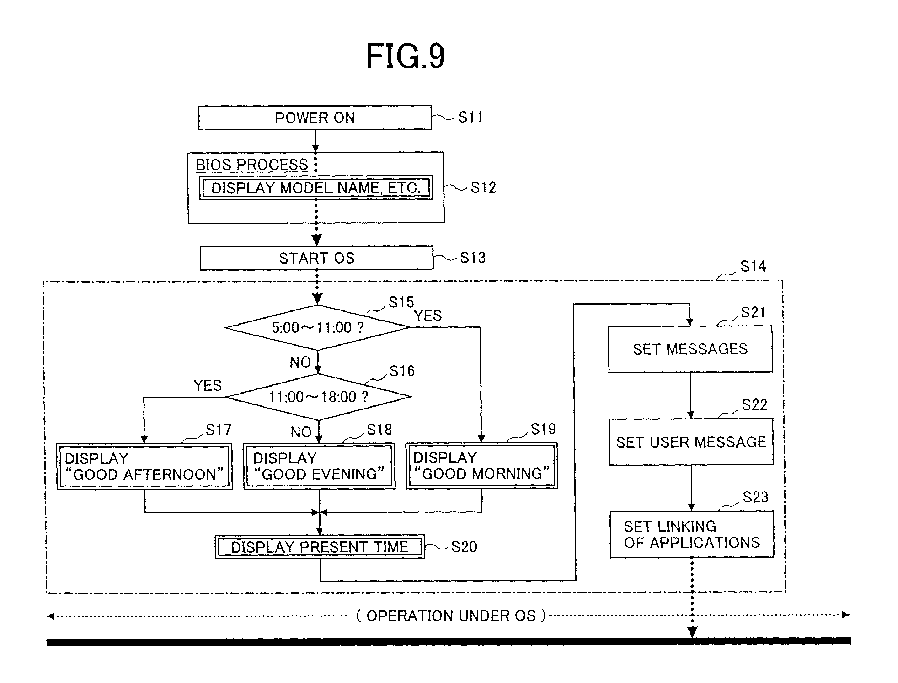

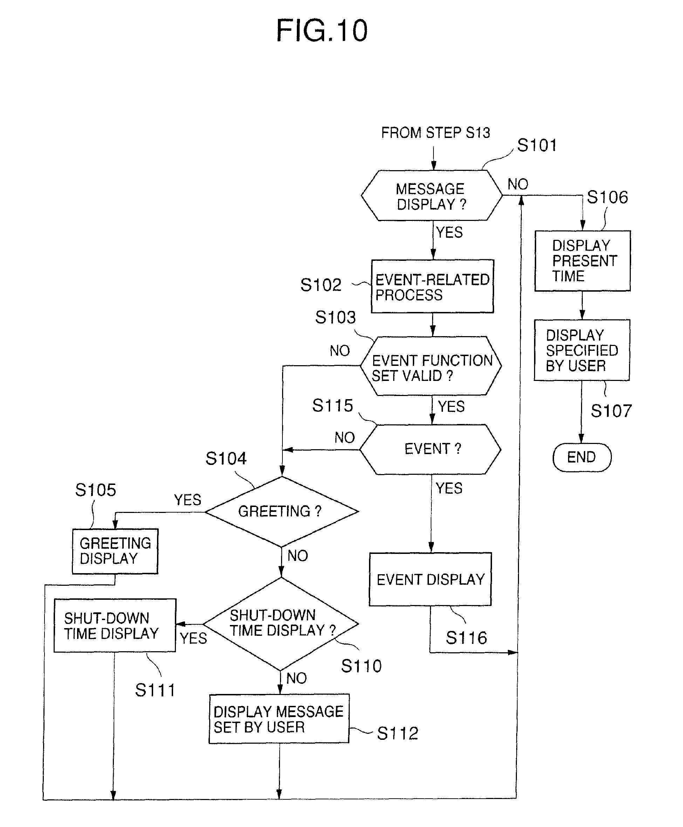

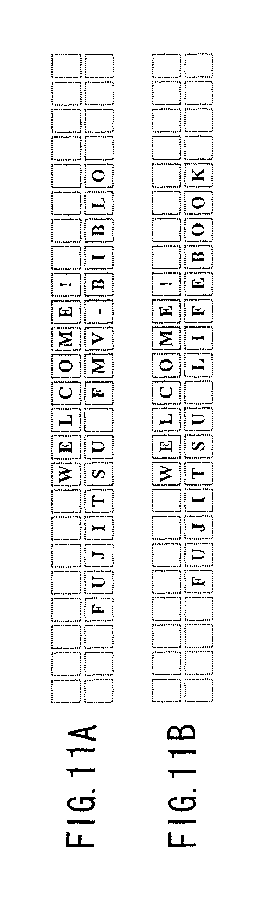

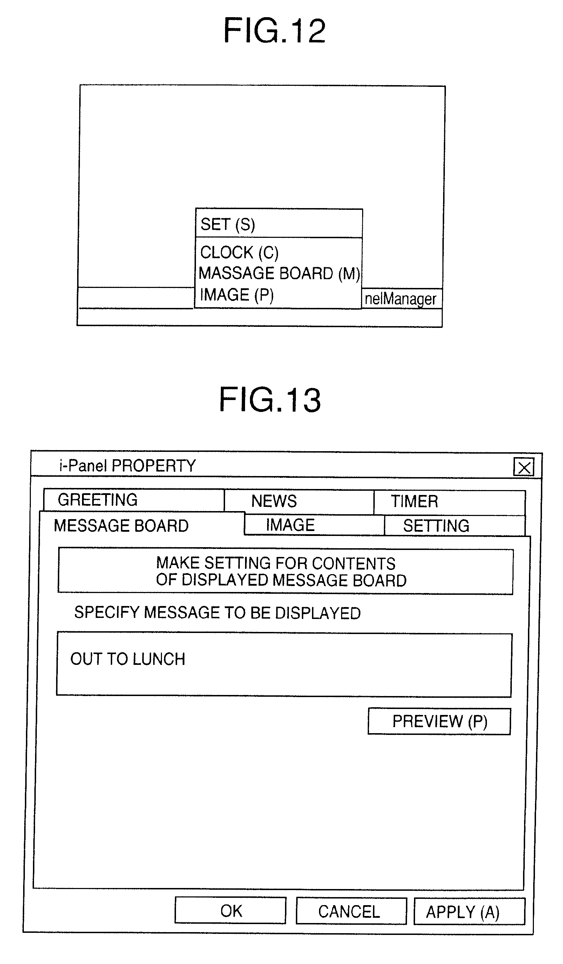

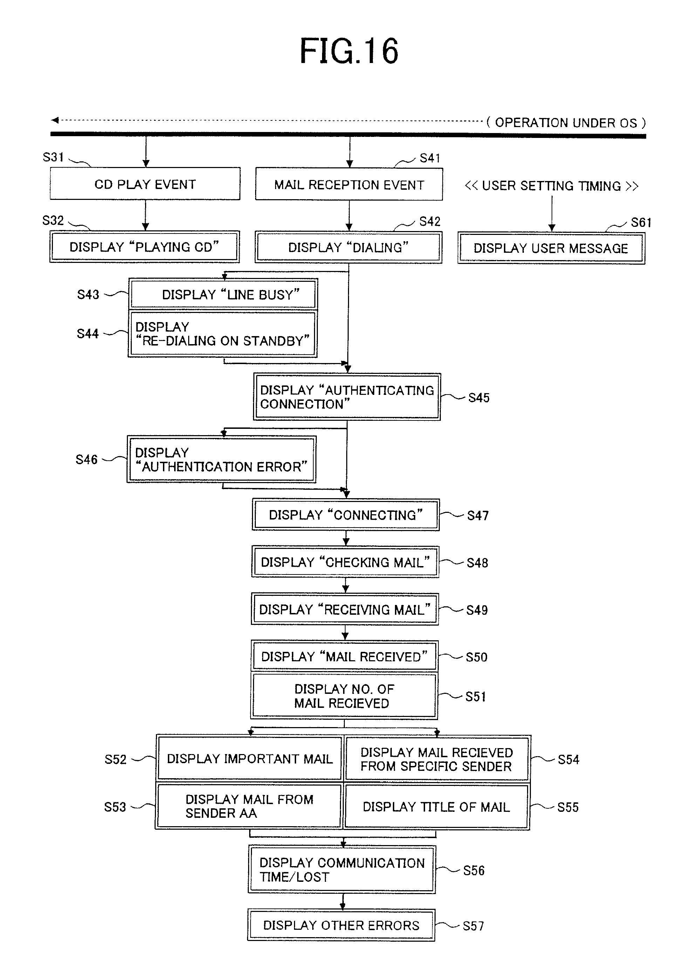

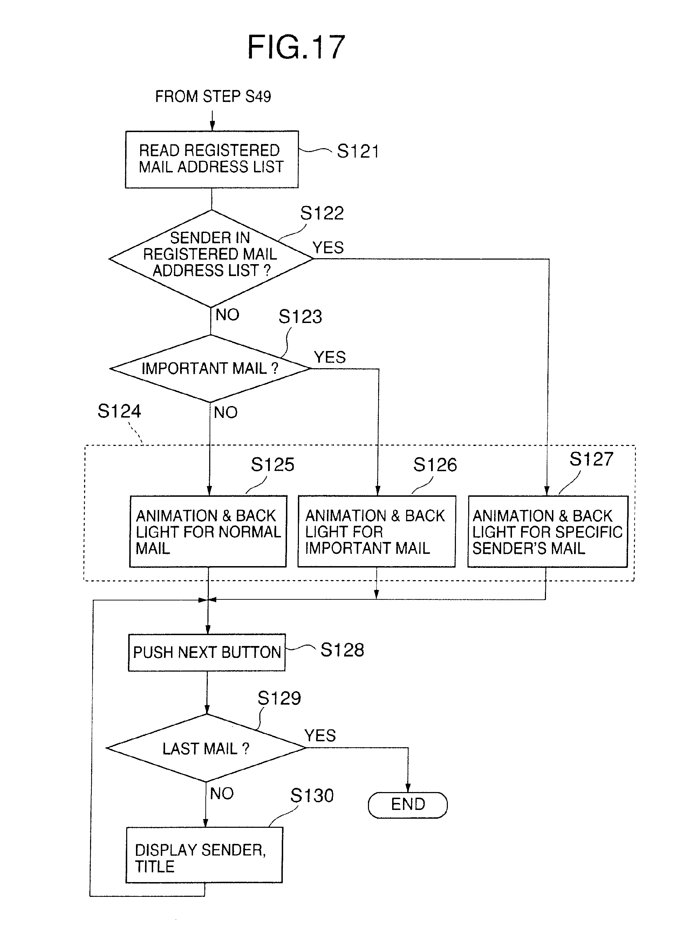

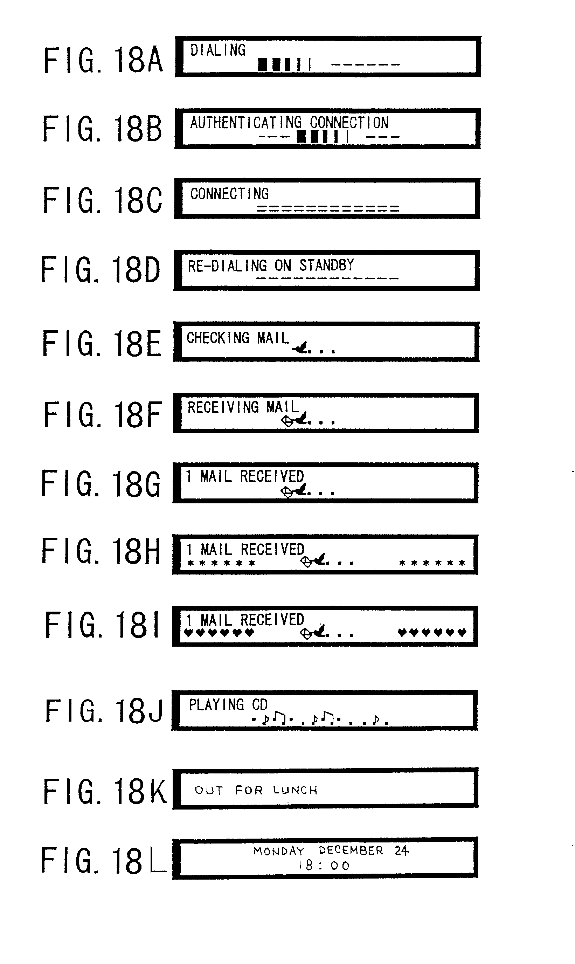

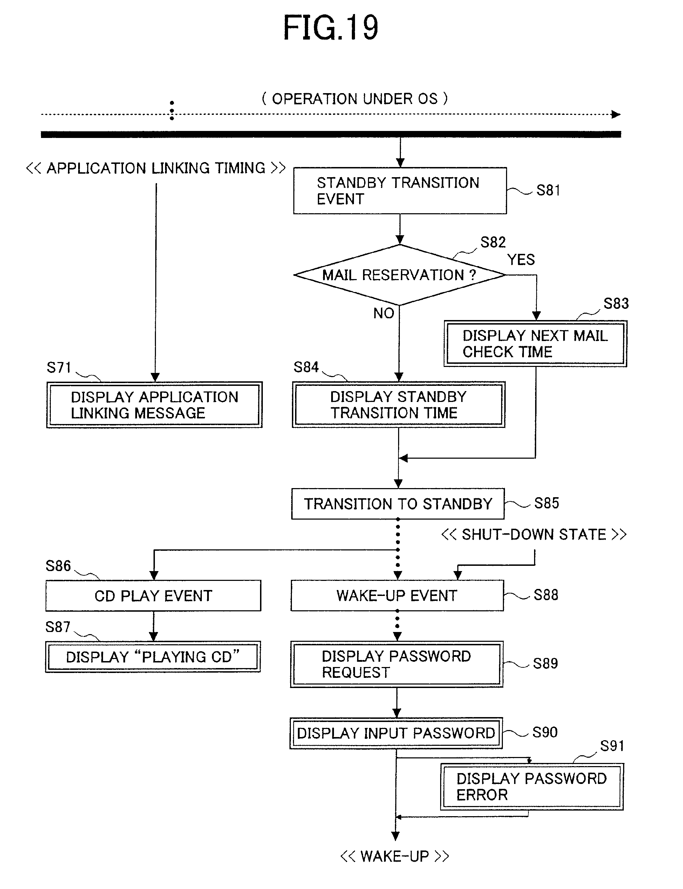

Next, a description will be given of the operation of this embodiment of the electronic equipment as a whole, by referring to FIGS. 9 through 19. FIG. 9 is a flow chart for explaining an operation when turning ON the power of the information processing apparatus. FIG. 10 is a flow chart for explaining a process shown in FIG. 9 in more detail. FIGS. 11A and 11B are diagrams showing information displayed during a BIOS process. FIGS. 12 through 15 respectively are diagrams for explaining setting screens. FIG. 16 is a flow chart for explaining an operation dependent on various events. FIG. 17 is a flow chart for explaining a process shown in FIG. 16 in more detail. FIGS. 18A through 18J are diagrams showing various display information depending on the operation. Further, FIG. 19 is a flow chart for explaining the operation dependent on the various events. In FIGS. 9, 16 and 19, steps indicated by boxes with a double solid line are basically carried out by the LCD handling software 324 described above.

In FIG. 9, when the power of the information processing apparatus is turned ON in a step S11, a step S12 carries out the BIOS process. As a result, model information related to a model name and the like of the information processing apparatus is displayed in the character display part 24 of the auxiliary display section 5. FIGS. 11A and 11B show examples of the model information which is displayed in the character display part 24. After the step S12, a step S13 starts an operating system (OS), and the process advances to a step S14 for setting the display contents of the auxiliary displays section 5. The step S14 includes steps S15 through S23.

The step S15 decides whether or not the present time is between 5:00 and 11:00. If the decision result in the step S15 is YES, the step S19 displays a greeting "GOOD MORNING" in the character display part 24 of the auxiliary display section 5, and the process advances to the step S20. On the other hand, if the decision result in the step S15 is NO, the step S16 decides whether or not the present time is between 11:00 and 18:00. If the decision result in the step S16 is YES, the step S17 displays a greeting "GOOD AFTERNOON" in the character display part 24, and the process advances to the step S20. If the decision result in the step S16 is NO, the step S18 displays a greeting "GOOD EVENING" in the character display part 24, and the process advances to the step S20. The greeting message displayed in the character display part 24 may scroll. The step S20 displays the present time in the character display part 24 of the auxiliary display section 5.

After the step S20, the step S21 sets messages which are related to the CD player, the electronic mail and the password and are to be displayed in the character display part 24. The setting of the messages made in the step S21 may be related to the setting the important or specific electronic mail, setting the display of sender or subject name (title), setting the display of the communication time or communication cost, setting the back light 24A and the like.

The step S22 sets a user message which is to be displayed in the character display part 24. The setting of the user message made in the step S22 may be related to the setting of the display contents, setting of the display timing, setting of the back light 24A and the like.

The step S23 sets linking of applications (PIM, etc.) which are to be displayed in the character display part 24. The setting of the linking of the applications made in the step S23 may be related to the setting linked to a schedule, setting linked to the back light 24A and the like.

After the step S23, the information processing apparatus carries out an operation by the OS, and processes which will be described with reference to FIGS. 16 and 19 are carried out depending on the generation of various events. In the following description, it is assumed for the sake of convenience that the display contents are displayed in the character display part 24 of the auxiliary display section 5.

Next, a more detailed description will be given of a process carried out in the step S14 shown in FIG. 9, by referring to FIG. 10. In FIG. 10, after the step S13 shown in FIG. 9, a step S101 decides whether or not to make a message display, and a step S102 carries out an event-related process if the decision result in the step S101 is YES. A step S103 decides whether or not an event function is set valid, and a step S104 decides whether or not to make a greeting if the decision result in the step S103 is NO. If the decision result in the step S104 is YES, a step S105 displays a greeting, such as the greetings of the steps S17 through S19 shown in FIG. 9 depending on the present time, for example, in the character display part 24 of the auxiliary display section 5, and the process advances to a step S106. The step S106 displays the present time in the character display part 24. In addition, a step S107 makes a display which is set by the user in the character display part 24 of the auxiliary display section 5. When the user makes the settings in the steps S21 through S23 shown in FIG. 9, the settings are made between the steps S106 and S107. For example, the operating system (OS) operates, and the settings are made to enable use of the applications which operate under the OS.

On the other hand, if the decision result in the step S104 is NO, a step S110 decides whether or not a display of a shut-down time of the information processing apparatus is to be made. If the decision result in the step S110 is YES, a step S111 displays the shut-down time, and the process advances to the step S106. In addition, if the decision result in the step S110 is NO, a step S112 displays a message which is set by the user in the character display part 24 of the auxiliary display section 5, and the process advances to the step S106.

If the decision result in the step S103 is YES, a step S115 decides whether or not an event is generated, and the process advances to the step S104 if the decision result in the step S115 is NO. On the other hand, if the decision result in the step S115 is YES, a step S116 displays the generated event in the character display part 24 of the auxiliary display section 5, and the process advances to the step S106.

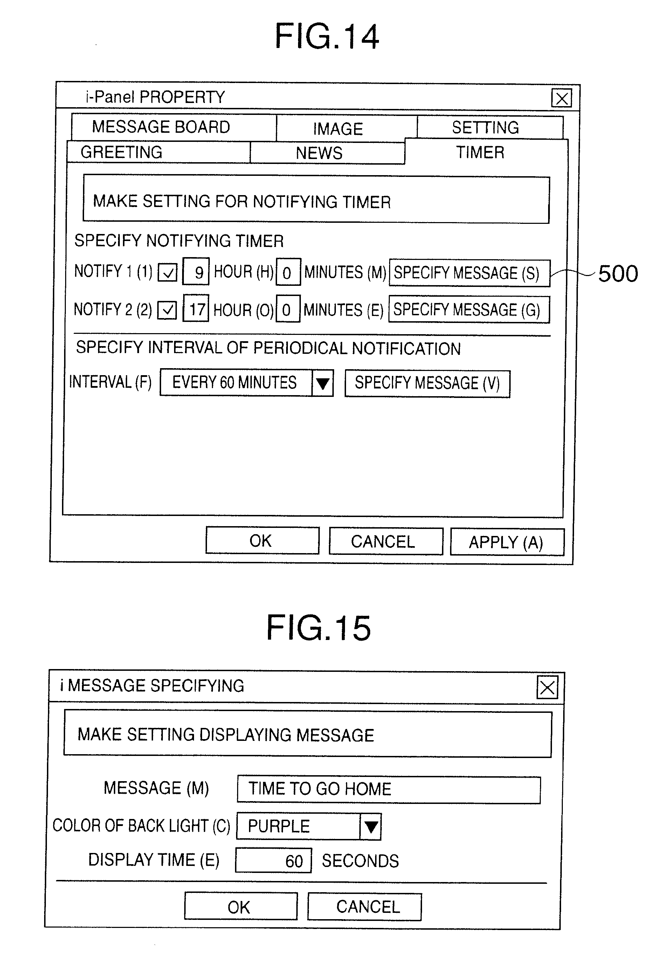

Next, a description will be given of the various setting screens which are displayed in the main display section 15 when making the settings in the steps S21 through S23 shown in FIG. 9, by referring to FIGS. 12 through 15. FIG. 12 is a diagram showing a tray menu screen. FIG. 13 is a diagram showing a message board setting screen. FIG. 14 is a diagram showing a timer setting screen. Further, FIG. 15 is a diagram showing a message specifying screen.

For the sake of convenience, it is assumed that the application used for making the settings related to the processes which use the auxiliary display section 5, the settings related to the contents to be displayed on the auxiliary display section 5 and the like operate under the Windows (registered trademark) operating system (OS). In this case, when the information processing apparatus is started, an icon indicating this application is displayed in a task tray, and the tray menu screen shown in FIG. 12 is displayed when the user selects this icon in order to make the settings in the steps S21 through S23.

When the user selects "SETTING" on the tray menu screen, a property setting screen shown in FIG. 13 is displayed. The property setting screen is made up of a plurality of tabs corresponding to the settings, and the user selects the tab corresponding to the setting which is to be changed. In FIG. 13, six tabs are provided, namely, a message board tab, an image tab, a setting tab, a greeting tab, a news tab and a timer tab. FIG. 13 shows a state where the message board tab is selected from the six tabs. The user specifies a message which is to be displayed in the message board tab. In this particular case, a message "OUT FOR LUNCH" is specified.

FIG. 14 shows a state where the timer tab is selected from the six tabs. In this timer tab, the user specifies a time when a notification is to be made, a message which is to be notified, a notifying interval in a case where the notification is to be made periodically, and the like. In this particular case, two kinds of notifications and messages can be specified. In addition, when specifying the message to be notified, the user selects a message specifying (S) button 500 corresponding to a message (M), for example, and the message specifying screen shown in FIG. 15 is displayed. FIG. 15 shows a case where the message (M), a color (C) of the back light of the auxiliary display section 5, and a display time can be set. More particularly, FIG. 15 shows a state where the message (M) is set to "TIME TO GO HOME", the color (C) of the back light is set to "PURPLE", and the display time is set to "60 SECONDS".

When other tabs are selected, it is possible to similarly change the corresponding settings.

Next, a description will be given of the processes which are carried out depending on the generation of the various events, by referring to FIG. 16. In FIG. 16, when a CD play event is generated in a step S31, a step S32 displays a message shown in FIG. 18J to indicate that the CD is being played. In FIG. 18J and FIGS. 18A through 18L, the symbols and animation, other than the characters, may be used to supplement the contents of the message which is indicated by the characters. In the case shown in FIG. 18J, the musical notes displayed under the characters indicate that music is being played by playing the CD.

When an electronic mail reception event is generated in a step S41 shown in FIG. 16, a step S42 displays a message shown in FIG. 18A to indicate that a dial-up is in progress. Thereafter, depending on the result of the dial-up, a step S43 displays a message indicating that the line is busy, and/or a step S44 displays a message shown in FIG. 18D to indicate that a re-dialing is on standby. A step S45 displays a message shown in FIG. 18B to indicate that authentication of the connection is taking place. Depending on the result of the connection authentication, a step S46 displays a message to indicate a generation of an authentication error.

A step S47 displays a message shown in FIG. 18C to indicate that the line is being connected, and a step S48 displays a message shown in FIG. 18E to indicate that the electronic mail is being checked. A step S49 displays a message shown in FIG. 18F to indicate that the electronic mail is being received. A step S50 displays a message shown in FIG. 18G to indicate that the electronic mail is received. In addition, a step S51 displays a message to indicate the number of received electronic mail.

A step S52 may display a message shown in FIG. 18H to indicate the reception of an important electronic mail. A step S53 may display a message shown in FIG. 18I to indicate that an electronic mail is received from a specific sender AA. On the other hand, a step S54 may display a message to indicate the reception of an electronic mail from a specific sender, and a step S55 may display a message to indicate the subject name (title) of received electronic mail.

A step S56 displays a message indicating the communication time or the communication cost, and a step S57 displays a message indicating an error if other errors exist.

In a case where a setting has been made by the user to display a specified message by use of the message board tab described above, a step S61 displays a message such as that shown in FIG. 18K.

The display contents of the messages shown in FIGS. 18A through 18L may scroll, and the ON/OFF state and the color display of the back light 24A may be switched arbitrarily. Furthermore, symbols and/or animation may be displayed together with the display contents of the messages shown in FIGS. 18A through 18J. Particularly when indicating the important electronic mail or the reception of the electronic mail from the specific sender, for example, it is possible to indicate the importance of the display contents of the message by emphasizing the display by the control of the back light 24A. In addition, by displaying the message related to the error or the like using red back lighting or blinking of the back lighting by the control of the back light 24A, it is possible to make the user easily recognize the abnormal state or the like of the information processing apparatus. Moreover, it is of course possible to successively display a plurality of kinds of messages in turns or rotation.

Next, a more detailed description will be given of the processes carried out by the step S50 and the subsequent steps shown in FIG. 16, by referring to FIG. 17. In FIG. 17, after the step S49 shown in FIG. 16, a step S121 reads a registered mail address list which is registered in advance in a main memory (RAM or the like, not shown) or an auxiliary storage unit (hard disk drive or the like, not shown), and a step S122 decides whether or not the mail address of the sender of the electronic mail is included in the registered mail address list. If the decision result in the step S122 is NO, a step S123 decides whether or not an important electronic mail is included in the received electronic mails. For example, it is possible to distinguish the important electronic mail from other electronic mails, using information such as a specific sender of the electronic mail, a specific title of a priority order of the header of the electronic mail, and the electronic mail having a predetermined marking made thereon.

If the decision result in the step S123 is NO, a step S125 sets the symbol/animation and the back light for the normal electronic mail, and the process advances to a step S128 which will be described later. If the decision result in the step S123 is YES, a step S126 sets the symbol/animation and the back light for the important electronic mail, and the process advances to the step S128 which will be described later. In addition, if the decision result in the step S122 is YES, a step S127 sets the symbol/animation and the back light for the electronic mail from the specific sender, and the process advances to the step S128 which will be described later. The steps S125 through S127 form a step S124 which also includes the processes of the steps S50 and S51 shown in FIG. 16.

The step S128 advances to a next electronic mail if advancing to the next electronic mail is instructed by the pushing of the application button of the application button group 7, for example. A step S129 decides whether or not the electronic mail is the last electronic mail and no next electronic mail exists. The process ends if the decision result in the step S129 is YES. On the other hand, if the decision result in the step S129 is NO, a step S130 displays the sender, the title and the like of the next electronic mail, and the process returns to the step S128. Accordingly, the step S130 includes the processes of the steps S53, S55 or the like shown in FIG. 16.

If the decision result in the step S129 is YES, it is of course possible to carry out the processes of the steps S56 and S57 shown in FIG. 16 before ending the process.

Next, a description will be given of the processes carried out depending on the generation of the various events, by referring to FIG. 19. In FIG. 19, at an application linking timing, a step S71 displays an application linking message. For example, a schedule linking display is made at a scheduled time. In other words, it is possible to display contents such as corresponding schedule information which has been set by the user, at a time which is set on the application by the user. Accordingly, a display can be made depending on the time and contents which have been set by the user on a schedule management application or the like. In a case where a setting has been made by the user to display a specified message at a specified timing by use of the timer tab described above, the step S71 displays a message such as that shown in FIG. 18L. In FIG. 18L, only the leaving time (time to go home) and the present date are displayed, but it is of course possible to scroll the display so that such time information and the message "TIME TO GO HOME" are alternately displayed. Further, it is of course possible to display only the message.

In this case, it is possible to set a message corresponding to a time, within the schedule management application, and to link the auxiliary display section 5 and a program which generates an alarm or the like at the set time. The schedule management application generates an interrupt or the like with respect to the auxiliary display section 5 at the scheduled time, and the auxiliary display section 5 displays the schedule which is set by the schedule management application.

When a standby transition event is generated in a step S81, a step S82 decides whether or not an electronic mail reservation is made. If the decision result in the step S82 is YES, a step S83 displays the next electronic mail check time, and the process advances to a step S85. On the other hand, if the decision result in the step S82 is NO, a step S84 displays the standby transition time when the transition is made to the standby state. After the step S83 or S84, the step S85 controls the information processing apparatus to make the transition to the standby state.

When a CD play event which is on standby is generated in a step S86, a step S87 displays a message shown in FIG. 18J to indicate that the CD is being played.

In addition, after the transition to the standby state or, in a shut-down state, when a wake-up event is generated in a step S88, a step S89 displays a password request. The password request is a message indicating "PLEASE INPUT PASSWORD", for example. Furthermore, a step S90 displays the input password. The password may be input by pushing the application buttons of the application button group 7 located on the side of the auxiliary display section 5 a number of times and/or in an order corresponding to the password. Every time the application button is pushed, a symbol "*" or the like is displayed in the auxiliary display section 5. When an error exists in the input password, a step S91 may display a password error. The password error may be indicated by a message such as "PASSWORD IS IN ERROR". When the password is correctly input, the information processing apparatus assumes the wake-up state.

When inputting the password by pushing the application buttons of the application button group 7 the number of times and/or in the order corresponding to the password, this password input operation can easily be made in the state where the lid member 3 is closed. In addition, the result of the password input operation is displayed in the auxiliary display section 5 which is easily visible by the user in the state where the lid member 3 is closed. Accordingly, the password input operation and the password confirmation operation can be carried out regardless of the position of the lid member 3.

Further, the present invention is not limited to these embodiments, but various variations and modifications may be made without departing from the scope of the present invention.

### STATEMENTS SETTING OUT PREFERRED FEATURES OF THE APPLICATION

The present application is a divisional application of EP 01302716.4. The original claims of EP 01302716.4 are presented as statements below.
Statement 1. A status display control unit for displaying status information of an electronic equipment which includes a main display section and an auxiliary display section, characterized by:
   a controller displaying a standby transition time in the auxiliary display section, said standby transition time indicating a time when the electronic equipment makes a transition to a standby state.
Statement 2. A status display control unit for displaying status information of an electronic equipment which includes a main display section and an auxiliary display section, characterized by:
   a controller displaying a next electronic mail check time in the auxiliary display section, said next electronic mail check time indicating a time when an electronic mail is to be checked next in the electronic equipment.
Statement 3. A status display control unit for displaying status information of an electronic equipment which includes a main display section and an auxiliary display section, characterized by:
   a controller displaying a greeting message by characters in the auxiliary display section depending on a starting time of the electronic equipment.
Statement 4. A status display control unit for displaying status information of an electronic equipment which includes a main display section and an auxiliary display section, characterized by:
   a controller displaying a portable recording medium playing state of the electronic equipment in the auxiliary display section.
Statement 5. A status display control unit for displaying status information of an electronic equipment which includes a main display section and an auxiliary display section, characterized by:
   a controller displaying a communication connection status of the electronic equipment in the auxiliary display section.
Statement 6. The status display control unit according to statement 5, characterized in that the communication connection status includes at least one of a state during dial-up, a state during authentication of connection, a state during connection, a state during re-dial standby, a net communication time, a state during checking of electronic mail, a state during reception of electronic mail, and an abnormal state.
Statement 7. A status display control unit for displaying status information of an electronic equipment which includes a main display section and an auxiliary display section, characterized by:
   a controller displaying a message by characters, indicating a reception of an electronic mail by the electronic equipment, in the auxiliary display section.
Statement 8. A status display control unit for displaying status information of an electronic equipment which includes a main display section and an auxiliary display section, characterized by:
   a controller displaying a notification, indicating a reception of a specific electronic mail by the electronic equipment, in the auxiliary display section.
Statement 9. The status display control unit according to statement 8, characterized in that the specific electronic mail is an important electronic mail.
Statement 10. The status display control unit according to statement 9, characterized in that said controller displays the notification using color display and/or blinking display.
Statement 11. The status display control unit according to statement 8, characterized in that the specific electronic mail is an electronic mail from a specific sender.
Statement 12. The status display control unit according to statement 11, characterized in that said controller displays the notification using color display and/or blinking display.
Statement 13. A status display control unit for displaying status information of an electronic equipment which includes a main display section and an auxiliary display section, characterized by:
   a controller displaying information, capable of specifying an electronic mail received by the electronic equipment, in the auxiliary display section.
Statement 14. The status display control unit according to statement 13, characterized in that the information is related to a sender of the electronic mail.
Statement 15. The status display control unit according to statement 13, characterized in that the information is related to a subject name or a title of the electronic mail.
Statement 16. A status display control unit for displaying status information of an electronic equipment which includes a main display section and an auxiliary display section, characterized by:
   a controller displaying at least one of a communication time and a communication cost of the electronic equipment in the auxiliary display section.
Statement 17. A status display control unit for displaying status information of an electronic equipment which includes a main display section and an auxiliary display section, characterized by:
   a controller displaying model information of the electronic equipment in the auxiliary display section when starting the electronic equipment.
Statement 18. A status display control unit for displaying status information of an electronic equipment which includes a main display section and an auxiliary display section, characterized by:
   a controller displaying a position of a volume adjusting knob of the electronic equipment in the auxiliary displays section.
Statement 19. A status display control unit for displaying status information of an electronic equipment which includes a main display section and an auxiliary display section, characterized by:
   a controller displaying the status information in the auxiliary display section using color display and/or blinking display.
Statement 20. A status display control unit for displaying status information of an electronic equipment in an auxiliary display section which has a display area smaller than that of a main display section of the electronic equipment, characterized by:
   a controller displaying a plurality of status information of the electronic equipment in the auxiliary display section, by messages in characters in combination with at least one of symbols and color display and/or blinking display of the auxiliary display section.
Statement 21. An electronic equipment characterized by:
   a main display section;
   an auxiliary display section displaying status information of the electronic equipment; and
   a controller displaying a standby transition time in the auxiliary display section, said standby transition time indicating a time when the electronic equipment makes a transition to a standby state.
Statement 22. An electronic equipment characterized by:
   a main display section;
   an auxiliary display section displaying status information of the electronic equipment; and
   a controller displaying a next electronic mail check time in the auxiliary display section, said next electronic mail check time indicating a time when an electronic mail is to be checked next in the electronic equipment.
Statement 23. An electronic equipment characterized by:
   a main display section;
   an auxiliary display section displaying status information of the electronic equipment; and
   a controller displaying a greeting message by characters in the auxiliary display section depending on a starting time of the electronic equipment.
Statement 24. An electronic equipment characterized by:
   a main display section;
   an auxiliary display section displaying status information of the electronic equipment; and
   a controller displaying a portable recording medium playing state of the electronic equipment in the auxiliary display section.
Statement 25. An electronic equipment characterized by:
   a main display section;
   an auxiliary display section displaying status information of the electronic equipment; and
   a controller displaying a communication connection status of the electronic equipment in the auxiliary display section.
Statement 26. The electronic equipment according to statement 25, characterized in that the communication connection status includes at least one of a state during dial-up, a state during authentication of connection, a state during connection, a state during re-dial standby, a net communication time, a state during checking of electronic mail, a state during reception of electronic mail, and an abnormal state.
Statement 27. An electronic equipment characterized by:
   a main display section;
   an auxiliary display section displaying status information of the electronic equipment; and
   a controller displaying a message by characters, indicating a reception of an electronic mail by the electronic equipment, in the auxiliary display section.
Statement 28. An electronic equipment characterized by:
   a main display section;
   an auxiliary display section displaying status information of the electronic equipment; and
   a controller displaying a notification, indicating a reception of a specific electronic mail by the electronic equipment, in the auxiliary display section.
Statement 29. The electronic equipment according to statement 28, characterized in that the specific electronic mail is an important electronic mail.
Statement 30. The electronic equipment according to statement 29, characterized in that said controller displays the notification using color display and/or blinking display.
Statement 31. The electronic equipment according to statement 28, characterized in that the specific electronic mail is an electronic mail from a specific sender.
Statement 32. The electronic equipment according to statement 31, characterized in that said controller displays the notification using color display and/or blinking display.
Statement 33. An electronic equipment characterized by:
   a main display section;
   an auxiliary display section displaying status information of the electronic equipment; and
   a controller displaying information, capable of specifying an electronic mail received by the electronic equipment, in the auxiliary display section.
Statement 34. The electronic equipment according to statement 33, characterized in that the information is related to a sender of the electronic mail.
Statement 35. The electronic equipment according to statement 33, characterized in that the information is related to a subject name or a title of the electronic mail.
Statement 36. An electronic equipment characterized by:
   a main display section;
   an auxiliary display section displaying status information of the electronic equipment; and
   a controller displaying at least one of a communication time and a communication cost of the electronic equipment in the auxiliary display section.
Statement 37. An electronic equipment characterized by:
   a main display section;
   an auxiliary display section displaying status information of the electronic equipment; and
   a controller displaying model information of the electronic equipment in the auxiliary display section when starting the electronic equipment.
Statement 38. An electronic equipment characterized by:
   a main display section;
   an auxiliary display section displaying status information of the electronic equipment; and
   a controller displaying a position of a volume adjusting knob of the electronic equipment in the auxiliary displays section.
Statement 39. An electronic equipment characterized by:
   a main display section;
   an auxiliary display section displaying status information of the electronic equipment; and
   a controller displaying the status information in the auxiliary display section using color display and/or blinking display.
Statement 40. The electronic equipment according to any of statements 21 to 39, further characterized by:
   a main body; and
   a lid member which is provided on the main body and capable of taking an open position and a closed position,
   said main display section being provided on the lid member and being visible only in the open position of the lid member,
   said auxiliary display section being provided on the main body at a position which is visible in the closed position of the lid member.
Statement 41. The electronic equipment according to any of statements 21 to 39, further characterized by:
   a main body; and
   a lid member which is provided on the main body and capable of taking an open position and a closed position,
   said main display section being provided on the lid member and being visible only in the open position of the lid member,
   said auxiliary display section including a first auxiliary display section provided on the main body at a position which is visible in the closed position of the lid member, and a second auxiliary display section provided on the main body at a position only visible in the open position of the lid member.
Statement 42. An electronic equipment characterized by:
   a main display section;
   an auxiliary display section which has a display area smaller than that of the main display section; and
   a controller displaying a plurality of status information of the electronic equipment in the auxiliary display section, by messages in characters in combination with at least one of symbols and color display and/or blinking display of the auxiliary display section.
Statement 43. A computer-readable storage medium which stores a program for causing a computer to display status information of an electronic equipment which includes a main display section and an auxiliary display section, said program characterized by:
   a control procedure causing the computer to display a standby transition time in the auxiliary display section, said standby transition time indicating a time when the electronic equipment makes a transition to a standby state.
Statement 44. A computer-readable storage medium which stores a program for causing a computer to display status information of an electronic equipment which includes a main display section and an auxiliary display section, said program characterized by:
   a control procedure causing the computer to display a next electronic mail check time in the auxiliary display section, said next electronic mail check time indicating a time when an electronic mail is to be checked next in the electronic equipment.
Statement 45. A computer-readable storage medium which stores a program for causing a computer to display status information of an electronic equipment which includes a main display section and an auxiliary display section, said program characterized by:
   a control procedure causing the computer to display a greeting message by characters in the auxiliary display section depending on a starting time of the electronic equipment.
Statement 46. A computer-readable storage medium which stores a program for causing a computer to display status information of an electronic equipment which includes a main display section and an auxiliary display section, said program characterized by:
   a control procedure causing the computer to display a portable recording medium playing state of the electronic equipment in the auxiliary display section.
Statement 47. A computer-readable storage medium which stores a program for causing a computer to display status information of an electronic equipment which includes a main display section and an auxiliary display section, said program characterized by:
   a control procedure causing the computer to display a communication connection status of the electronic equipment in the auxiliary display section.
Statement 48. A computer-readable storage medium which stores a program for causing a computer to display status information of an electronic equipment which includes a main display section and an auxiliary display section, said program characterized by:
   a control procedure causing the computer to display a message by characters, indicating a reception of an electronic mail by the electronic equipment, in the auxiliary display section.
Statement 49. A computer-readable storage medium which stores a program for causing a computer to display status information of an electronic equipment which includes a main display section and an auxiliary display section, said program characterized by:
   a control procedure causing the computer to display a notification, indicating a reception of a specific electronic mail by the electronic equipment, in the auxiliary display section.
Statement 50. A computer-readable storage medium which stores a program for causing a computer to display status information of an electronic equipment which includes a main display section and an auxiliary display section, said program characterized by:
   a control procedure causing the computer to display information, capable of specifying an electronic mail received by the electronic equipment, in the auxiliary display section.
Statement 51. A computer-readable storage medium which stores a program for causing a computer to display status information of an electronic equipment which includes a main display section and an auxiliary display section, said program characterized by:
   a control procedure causing the computer to display at least one of a communication time and a communication cost of the electronic equipment in the auxiliary display section.
Statement 52. A computer-readable storage medium which stores a program for causing a computer to display status information of an electronic equipment which includes a main display section and an auxiliary display section, said program characterized by:
   a control procedure causing the computer to display model information of the electronic equipment in the auxiliary display section when starting the electronic equipment.
Statement 53. A computer-readable storage medium which stores a program for causing a computer to display status information of an electronic equipment which includes a main display section and an auxiliary display section, said program characterized by:
   a control procedure causing the computer to display a position of a volume adjusting knob of the electronic equipment in the auxiliary displays section.
Statement 54. A computer-readable storage medium which stores a program for causing a computer to display status information of an electronic equipment which includes a main display section and an auxiliary display section, said program characterized by:
   a control procedure causing the computer to display the status information in the auxiliary display section using color display and/or blinking display.
Statement 55. A computer-readable storage medium which stores a program for causing a computer to display status information of an electronic equipment which includes a main display section and an auxiliary display section, said program characterized by:
   a control procedure causing the computer to display a plurality of status information of the electronic equipment in the auxiliary display section, by messages in characters in combination with at least one of symbols and color display and/or blinking display of the auxiliary display section.
Statement 56. A status display control unit for displaying status information of an electronic equipment which includes a main display section and an auxiliary display section, characterized by:
   a controller displaying contents set in correspondence with time in the auxiliary display section.
Statement 57. The status display control unit according to statement 56, characterized in that the contents include schedule information.
Statement 58. A status display control unit for displaying status information of an electronic equipment which includes a main display section and an auxiliary display section, characterized by:
   a controller displaying information related to input of a password of the electronic equipment in the auxiliary display section.
Statement 59. An electronic equipment characterized by:
   a main display section;
   an auxiliary display section displaying status information of the electronic equipment; and
   a controller displaying contents set in correspondence with time in the auxiliary display section.
Statement 60. The electronic equipment according to statement 59, characterized in that the contents include schedule information.
Statement 61. An electronic equipment characterized by:
   a main display section;
   an auxiliary display section displaying status information of the electronic equipment; and
   a controller displaying information related to input of a password of the electronic equipment in the auxiliary display section.
Statement 62. A computer-readable storage medium which stores a program for causing a computer to display status information of an electronic equipment which includes a main display section and an auxiliary display section, said program characterized by:
   a control procedure causing the computer to display contents set in correspondence with time in the auxiliary display section.
Statement 63. The computer-readable storage medium according to statement 62, characterized in that the contents include schedule information.
Statement 64. A computer-readable storage medium which stores a program for causing a computer to display status information of an electronic equipment which includes a main display section and an auxiliary display section, said program characterized by:
   a control procedure causing the computer to display information related to input of a password of the electronic equipment in the auxiliary display section.
Statement 65. A status display control unit for displaying status information of an electronic equipment on an auxiliary display section of the electronic equipment having a display area smaller than a main display section of the electronic equipment, characterized by:
   a controller displaying a plurality of status information of the electronic equipment in the auxiliary display section by a combination of a message using characters and at least one of symbols and a color display and/or a blinking display of the auxiliary display section.
Statement 66. The status display control unit according to statement 65, characterized in that said controller displays the message in the auxiliary display section by scrolling characters.
Statement 67. The status display control unit according to statement 65, characterized in that the status information includes at least one of status information related to time, status information related to an electronic mail, status information related to a device within the electronic equipment, and status information related to a password.
Statement 68. The status display control unit according to statement 67, characterized in that the status information related to the time is at least one of a standby transition time, a next electronic mail check time, and a greeting dependent on a starting time of the electronic equipment.
Statement 69. The status display control unit according to statement 67, characterized in that the status information related to the electronic mail includes at least one of a dial-up in progress, an authentication of a connection taking place, a line being connected, a re-dialing on standby, an electronic mail being checked, an electronic mail being received, a sender of an electronic mail, a title of an electronic mail, an electronic mail from a specific sender, a receipt of an important electronic mail, a communication time of an electronic mail, a communication cost of an electronic mail, and an abnormal state.
Statement 70. The status display control unit according to any of statements 67 to 69, characterized in that the status information related to the device indicates a position of a volume adjusting knob.
Statement 71. An electronic equipment characterized by:
   a main display section;
   an auxiliary display section having a display area smaller than that of the main display section; and
   a controller displaying a plurality of status information of the electronic equipment in the auxiliary display section by a combination of a message using characters and at least one of symbols and a color display and/or a blinking display of the auxiliary display section.
Statement 72. The electronic equipment according to statement 71, further characterized by:
   a main body; and
   a lid member capable of opening and closing with respect to the main body and having the main display section arranged at a position which is visible only when the lid member is open,
   said auxiliary display section being arranged on the main body at a position which is visible even when the lid member is closed.
Statement 73. The electronic equipment according to statement 71, further characterized by:
   a main body; and
   a lid member capable of opening and closing with respect to the main body and having the main display section arranged at a position which is visible only when the lid member is open,
   said auxiliary display section including a first display part arranged on the main body at a position which is visible even when the lid member is closed, and a second display part arranged on the main body at a position which is visible only when the lid member is open.
Statement 74. The electronic equipment according to any of statements 71 to 73, characterized in that said controller displays the message in the auxiliary display section by scrolling characters.
Statement 75. The electronic equipment according to any of statements 71 to 74, characterized in that the status information includes at least one of status information related to time, status information related to an electronic mail, status information related to a device within the electronic equipment, and status information related to a password.
Statement 76. The electronic equipment according to statement 75, characterized in that the status information related to the time is at least one of a standby transition time, a next electronic mail check time, and a greeting dependent on a starting time of the electronic equipment.
Statement 77. The electronic equipment according to statement 75 or 76, characterized in that the status information related to the electronic mail includes at least one of a dial-up in progress, an authentication of a connection taking place, a line being connected, a re-dialing on standby, an electronic mail being checked, an electronic mail being received, a sender of an electronic mail, a title of an electronic mail, an electronic mail from a specific sender, a receipt of an important electronic mail, a communication time of an electronic mail, a communication cost of an electronic mail, and an abnormal state.
Statement 78. The electronic equipment according to any of statements 75 to 77, characterized in that the status information related to the device indicates a position of a volume adjusting knob.
Statement 79. The electronic equipment according to any of statements 71 to 73, characterized in that said controller displays a message which is specified in advance by characters on the auxiliary display section.
Statement 80. The electronic equipment according to any of statements 71 to 73 and 79, characterized in that said status information in includes time information of a timer which is specified in advance.
Statement 81. The status display control unit according to statement 65, characterized in that said controller displays a message which is specified in advance by characters on the auxiliary display section.
Statement 82. The status display control unit as according to statement 65 or 81, characterized in that said status information in includes time information of a timer which is specified in advance.

The present application as filed comprises all of the original content (description, claims and drawings) of EP 01302716.4, and the applicant reserves the right to write claims based on any of that content in the present application or in any divisional application based on the present application.

## Claims

1. An electronic equipment comprising:
a first housing (1);
a second housing (3);
a hinge (2) connecting the first housing with the second housing;
a main display section (15) which is hidden by the first housing and the second housing in a closed state where the first housing and the second housing are closed with respect to each other via the hinge, and which is visible in an open state where the first housing and the second housing are open relative to each other via the hinge;
a keyboard which is hidden by the first housing and the second housing in said closed state, and which is visible in said open state; and
an auxiliary display section (5, 13) which is located at a portion of the electronic equipment away from the hinge, and which is visible in said closed state.

2. The electronic equipment as claimed in claim 1, **characterized by** a controller (39, 42) which displays a message in the auxiliary display section by characters in full words, indicating reception of an electronic mail by the electronic equipment; wherein
the controller allows display control in the auxiliary display section (5, 13) to be independent of display control in the main display section (15).

3. The status display control unit as claimed in claim 2, **characterized in that** said controller (39, 42) displays a notification, indicating a reception of a specific electronic mail by the electronic equipment, in the auxiliary display section (5, 13).

4. The status display control unit as claimed in claim 3, **characterized in that** the specific electronic mail is an important electronic mail.

5. The status display control unit as claimed in claim 3, **characterized in that** the specific electronic mail is an electronic mail from a specific sender.

6. The status display control unit as claimed in any of claims 2 to 5, **characterized in that** said controller (39, 42) displays the notification using color display and/or blinking display.

7. The status display control unit as claimed in claim 2, **characterized in that** said controller (39, 42) displays information, capable of specifying an electronic mail received by the electronic equipment, in the auxiliary display section (5, 13).

8. The status display control unit as claimed in claim 7, **characterized in that** the information is related to a sender of the electronic mail.

9. The status display control unit as claimed in claim 7, **characterized in that** the information is related to a subject name or a title of the electronic mail.

10. The status display control unit as claimed in claim 2, **characterized in that** said controller (39, 42) displays said message by characters in the auxiliary display section (5, 13) by scrolling characters.

11. The electronic equipment according to any of the preceding claims, wherein the first housing (1) includes a front panel (4) providing the auxiliary display section (5), a mode select switch (6) and an application button group (7).

12. The electronic equipment according to any of claims 1 to 10, wherein the auxiliary display section (13) is provided on the opposite side of the second housing (3) to the first housing (1).

13. The electronic equipment according to any of the preceding claims, wherein two auxiliary display sections (5, 13) are provided.
